# NEUE EUROPÄISCHE PATENTSCHRIFT

(11) **EP 0 354 427 B2**
(45) Veröffentlichungstag und Bekanntmachung des Hinweises auf die Entscheidung über den Einspruch: **16.09.1998**
(45) Hinweis auf die Patenterteilung: 26.05.1993
(21) Anmeldenummer: 89113952.9
(22) Anmeldetag: 28.07.1989
(51) Int. Cl.: F16K 31/365

(54) **Differenzdruckregelventil**
Differential pressure control valve
Soupape de réglage à pression différentielle

(30) Priorität: 11.08.1988 YU 1553/88; 16.01.1989 YU 88/89
(43) Veröffentlichungstag der Anmeldung: 14.02.1990
(73) Patentinhaber: Medvescek, Milan, 68250 Brezice (YU)
(72) Erfinder: Medvescek, Milan, 68250 Brezice (YU)
(74) Vertreter: Meyer, Jürgen

(56) Entgegenhaltungen:
- DE-A- 1 548 996
- DE-A- 2 110 393
- DE-A- 2 705 891
- DE-B- 2 314 883
- FR-A- 566 512
- GB-A- 590 947
- US-A- 2 377 227
- US-A- 3 570 529

## Beschreibung

Die Erlingung betrifft ein Differenzdruckregelventil für Warmwasserheizungsanlagen nach dem Oberbegriff des Anspruchs 1.

Derartige Differenzdruckregelventile werden insbesondere in Warmwasserheizungsanlagen verwendet, um eine vorgegebene Druckdifferenz zwischen dem Vorlaufdruck und dem Rücklaufdruck im Heizungskreislauf sicherzustellen.

Es sind derartige Differenzdruckregelventile hinlänglich bekannt, bei denen die Impulsleitungen außerhalb des Ventils angeordnet sind und bei denen der Eintritt der Rücklaufimpulsleitung in das Ventil direkt am Ventilkegel angeordnet ist. Diese vorbekannten Differenzdruckregelventile haben den Nachteil, daß aufgrund der Führung der Impulsleitung außerhalb des Ventils ein vergleichsweise hoher Installationsaufwand erforderlich ist. Der Eintritt der Rücklaufimpulsleitung direkt am Ventilkegel führt häufig wegen der Turbulenzen in dem Bereich des Ventils zu Unstabilitäten der Regelung und Druckschwankungen in der Heizungsanlage. Die Schmutzpartikel, die häufig in dem das Ventil durchfließenden Medium schwimmen, können häufig den Eintritt der Rücklaufimpulsleitung verstopfen, weil der Mediumstrom direkt in die Eintrittsöffnung fließt. Ist dies der Fall, so funktionieren die vorbekannten Differenzdruckregelventile nicht mehr.

Es sind weiterhin Differenzdruckregelventile bekannt, bei denen die Federbelastung der Membrane durch Torsionsfedern erfolgt. Diese bekannte Art der Federbelastung hat jedoch den Nachteil, daß die Einstellung des Differenzdrucksollwertes häufig kompliziert ist. Um die Regelabweichung bei der Regelung des Differenzdruckes klein zu halten, müssen die verwendeten Federn klein sein und die Federkonstanten müssen entsprechend klein sein. Dies würde üblicherweise lange Federn erfordern. Um die Länge der Federn zu verkürzen, benutzt man häufig einen Satz von 2 oder mehr konzentrisch liegenden Federn. Um eine Einstellung der Federkonstante und damit des gewünschten Differenzdruckes zu ermöglichen, werden häufig Federn mit unterschiedlichen Federkonstanten verwendet. Dies hat jedoch den Nachteil, daß es beim Einbau der Federn mit verschiedenen Federkonstanten zu Verwechslungen kommen kann, so daß möglicherweise ein falscher Differenzdrucksollwert eingestellt wird.

Die bekannten Differenzdruckregelventile sind häufig so konstruiert, daß sie entweder nur bei großen oder nur bei kleinen Differenzdrücken im wesentlichen geräuscharm funktionieren. Dies hat den Grund, daß bei großen Druckdifferenzen die sogenannten Kavitationsgeräusche häufig störend sind und daß bei kleinen Druckdifferenzen sogenannte Turbulenzgeräusche wie Pfeifen usw. hörbar sind. Ein Differenzdruckregelventil arbeitet jedoch praktisch oft in beiden Differenzdruckbereichen, so daß die bekannten Differenzdruckregelventile entweder bei großen oder bei kleinen Druckdifferenzen Geräusche erzeugen.

Ein derartiges Differenzdruckregelventil ist aus "Differenzdruckregler mit Durchflußbegrenzung", Einbau- und Bedienungsanleitung EB3030 der Fa. Samson, Januar 1988 vorbekannt. Die Kolbenstange dieses vorbekannten Differenzdruckregelventils weist einen Aufsatz auf, wobei die Räcklaufimpulsleitung innerhalb des Aufsatzes und der Kolbenstange angeordnet ist. Dieses vorbekannte Differenzdruckregelventil weist jedoch keinerlei Maßnahmen auf, um Verstopfungen der Rücklaufimpulsleitung zu vermeiden.
Aus der DE-A2314883 ist ein Stromregelventil vorbekannt, bei dem die Druckabgriffsöffnung innerhalb eines strömungsberuhigten Drosselbechers angeordnet ist, um die Übertragung von wechselhaftem, dynamiscnem Drücken in die Membrangehäusekammer möglichst weitgehend auszuschalten. Die Lage des Drosselbechers zum Ventilsitz ist veränderbar, um die Drosselwirkung des Drosselbechers und damit den Strömungsmitteldurchfluß durch das Stromregelventil voreinzustellen.

Die Erfindung hat die Aufgabe, ein Differenzdruckregelventil zu schaffen, das gegenüber den Vorbekannten einfach aufgebaut ist, einen hohen Schutz gegen Verstopfung der Rücklaufimpulsleitung bietet und wenig Installationsaufwand erfordert.

Diese Aufgabe wird erfindungsgemäß durch die Kennzeichenmerkmale des Anspruch 1 gelöst.

Durch diese Maßnahmen wird ein Differenzdruckregelventil geschaffen, bei dem der Eintritt der Rücklaufimpulsleitung nicht innerhalb des Bereiches der turbulenten Strömung des durch das Differenzdruckregelventil gesteuerten Mediums sich befindet. Das durch cas Differenzdruckregelventil gesteuerte Medium fließt im wesentlichen an dem Aufsatz vorbei und das in der erfindungsgemäß vorgesehenen Tasche des Gehäuses befindliche Medium ruht im wesentlichen. In dieser Tasche ist das Ende des Aufsatzes angeordnet, in dem der Eintritt der Rücklaufimpulsleitung vorgesehen ist.

Dadurch, daß die Rücklaufimpulsleitung innerhalb des Aufsatzes und der Kolbenstange angeordnet ist, sind zur Druckbeaufschlagung der Membrane mit dem Rücklaufdruck keinerlei zusätzliche und zusätzlich zu installierende Leitungen erforderlich, so daß der Installationsaufwand verringert ist und die Gefahr der Beschädigung einer solchen freistehenden Rücklaufimpulsleitung vermieden wird.

Durch das Fehlen einer zusätzlich erforderlichen Rücklaufimpulsleitung ist das erfindungsgemäße Differenzdruckregelventil einfach und kostengünstig herstellbar.

Durch die Anordnung der Eintrittsöffnung de Rücklaufimpulsleitung außerhalb des turbulenten Strömungsbereiches des zu steuernden Mediums ist die Verschmutzungsgefahr der Eintrittsöffnung und damit der Rücklaufimpulsleitung gegenübe dem Vorbekannten wesentlich verringert.

Vorteilhafte Ausgestaltungen und Weiterbildungen des erfindungsgemäßen Differenzdruckregelventils gehen aus den Unteransprüchen hervor.

Es ist besonders vorteilhaft, wie in Anspruch 2 beansprucht, den Eintritt in die Rücklaufimpulsleitung an dem dem Boden der Tasche zugewandten oberen Rand des Aufsatzes anzuordnen, weil durch diese Maßnahme der Eintritt in die Rücklaufimpulsleitung möglichst weit weg von dem Bereich der turbulenten Strömung des zu steuernden Mediums erfolgt und damit die Verschmutzung der Rücklaufimpulsleitung soweit wie möglich ausgeschlossen wird. Es ist weiterhin besonders vorteilhaft, wenn eine eingangsseitige Kante einer Gehäusewand des Gehäuses etwas schräg zur Achse des Aufsatzes besteht und in Richtung zum Ventilteller geneigt ist, weil durch diese Maßnahme eine Strömungsleitung im wesentlichen weg von der Tasche des Gehäuses und damit weg vom Eintritt in die Rücklaufimpulsleitung des zu steuernden Mediums erfolgt. Dies trägt zu einer weiteren Beruhigung der Strömung in der Tasche des Gehäuses bei.

Es ist weiterhin besonders vorteilhaft, wenn gemäß Anspruch 3 die Tiefe der Tasche und die Länge des Aufsatzes derart bemessen sind, daß auch bei vollgeöffnetem Differenzdruckregelventil und damit vollabgehobenem Ventilteller vom Ventilsitz der Eintritt in die Impulsleitung sich in der Tasche befindet, weil durch diese Maßnahme auch bei vollgeöffnetem Differnzdruckregelventil sichergestellt ist, daß der Eintritt in die Impulsleitung außerhalb des turbulenten Strömungsbereiches sich befindet.

Man kann die Rücklaufimpulsleitung gemäß Anspruch 4 vorteilhaft in eine einstückig ausgebildete Oberkammer münden lassen, die direkt in das Gehäuse eingeschraubt ist und eine Unterkammer vorsehen, wobei die Membrane abgedichtet zwischen Oberkammer und Unterkammer eingespannt ist. Durch diese Maßnahmen wird der konstruktive Aufbau des erfindungsgemäßen Differenzdruckregelventils wesentlich vereinfacht.

Es ist besonders vorteilhaft, wenn gemäß Anspruch 5 die Membrane durch einen Federsatz bestehend aus einer oder mehreren Schraubenfedern in Öffnungsrichtung des Differenzdruckregelventils belastet ist und wenn die Schraubenfedern alle die gleiche Länge und die gleiche Federkonstante aufweisen. Durch diese Maßnahmen kann eine Solldruckdifferenz durch Wahl der Anzahl der Schraubenfedern einfach vorgegeben werden, wobei aufgrund der Tatsache, daß die Schraubenfedern alle die gleiche Länge und die gleiche Federkonstante aufweisen, es egal ist, welche der vorhandenen Schraubenfedern man für den Federsatz im Einzelfall verwendet.

Zur Vereinfachung der mechanischen Konstruktion des erfindungsgemäßen Differenzdruckregelventils kann in diesem Zusammenhang vorteilhaft gemäß Anspruch 6 der Federsatz sich einerseits an der Unterkammer unmittelbar abstützen. Andererseits kann der Federsatz durch eine an der Kolbenstange angeordnete verstellbare Federbasis in seiner Vorspannung veränderlich sein. Durch diese Maßnahmen ist es einfach möglich, die durch die Wahl der Zahl der Schraubenfedern vorgegebene Solldruckdifferenz durch Verstellung der Federbasis und damit durch Veränderung der Federvorspannung auf verschiedene Werte einzustellen.

Zum Schutz des genannten Federsatzes kann vorteilhaft gemäß Anspruch 7 eine abnehmbare Federhaube vorgesehen sein, die den Federsatz umschließt und die an der Unterkammer angeordnet ist. Durch diese Maßnahmen kann eine Beschädigung des Federsatzes vermieden werden. Andererseits ist es möglich das erfindungsgemäße Differenzdruckregelventil einfach konstruktiv auszugestalten, weil der den Federsatz umschließende Federhaubenteil z. B. durch das zu steuernde Medium durchspült werden kann. In diesen Zusammenhang ist es vorteilhaft, wenn eine Absperrspindel vorgesehen ist, die durch einem Ansatz in der Federhaube drehbar gelagert ist und die in einer Führungsbohrung der Kolbenstange dreh- und verschiebbar gelagert ist. Mit Hilfe dieser Absperrspindel ist eine Absperrung des Differenzdruckregelventils möglich z. B. für die Durchführung von Wartungs- und Instandsetzungsarbeiten an einer Warmwasserheizungsanlage. Durch die drehbare Lagerung der Absperrspindel in der Federhaube mittels des genannten Ansatzes ist die Absperrspindel unverlierbar und kann z. B. nicht aus der Federhaube herausgedreht werden. Durch die dreh- und verschiebbare Lagerung der Absperrspindel in einer Führungsbohrung der Kolbenstange kann auf eine weitere Führung der Kolbenstange in dem Gehäuse der Oberkammer oder der Unterkammer verzichtet werden, was die mechanische Konstruktion des erfindungsgemäßen Differenzdruckregelventils wesentlich verbessert und vereinfacht.

Es ist weiterhin vorteilhaft, wenn gemäß Anspruch 8 die Federbasis durch einen Sprengring gegen Abdrehen oder Abfallen gesichert ist und wenn die Kolbenstange Markierungen, insbesondere Markierungsnuten, für die Einstellung der Federbasis aufweist. Durch den Sprengring bzw. die Markierungen ist es möglich, die Feineinstellung der Federvorspannung und damit die Feineinstellung des Solldifferenzdruckes durch Verstellung der Federbasis unmittelbar abzulesen.

Um gegebenenfalls die Abdichtung des erfindungsgemäßen Differenzdruckregelventils gegenüber der Umgebung zu verbessern, kann es gemäß Anspruch 9 vorteilhaft sein zwischen der Oberkammer und dem Gehäuse und/oder zwischen der Unterkammer und der Federhaube eine Weichstoffdichtung, insbesondere eine O-Ring - dichtung vorzusehen.

Schließlich ist es bosonders vorteilhaft, gemäß Anspruch 10 den Durchmesser des Ventiltellers gleich oder derart kleiner als den Durchmesser des Ventilsitzes zu wählen, daß auch bei größter fertigungsbedingter Abweichung der äußere Rand des Ventiltellers nicht über den äußeren Rand des Ventilsitzes hinausragt. In diesem Zusammenhang kann der äußere Rand des Ventilsitzes scharfkantig sein und von der Trennwand und der Seitenwand des Gehäuses möglichst weit entfernt sein. Der innere Rand des Ventilsitzes kann abgerundet sein und der äußere Rand des Ventiltellers kann scharfkantig sein. Durch diese Maßnahmen ist eine deutliche Geräuschreduzierung des erfindungsgemäßen Differenzdruckregelventils möglich, weil das durch das Differenzdruckregelventil gesteuerte Medium so frei wie möglich an der Engstelle zwischen dem Ventilteller und dem Ventilsitz vorbeiströmen kann, ohne daß es zu Übermäßigen Turbulenzen oder zu Kavitation kommt.

Ausführungsbeispiele des erfindungsgemäßen Differenzdruckregelventils sind in den Zeichnungen dargestellt und werden im Folgenden anhand der Zeichnungen näher erläutert.

Es zeigen
- Fig. 1: ein erfindungsgemäßes Differenzdruckregelventil in einem Schnitt durch die Mittelachse
- Fig. 2: ein Detail des erfindungsgemäßen Differenzdrückregelventils gemäß Fig. 1 betreffend die Ausgestaltung von Ventilteller und Ventilsitz und
- Fig. 3: ein zweites Ausführungsbeispiel eines erfindungsgemäßen Differenzdruckregelventils.

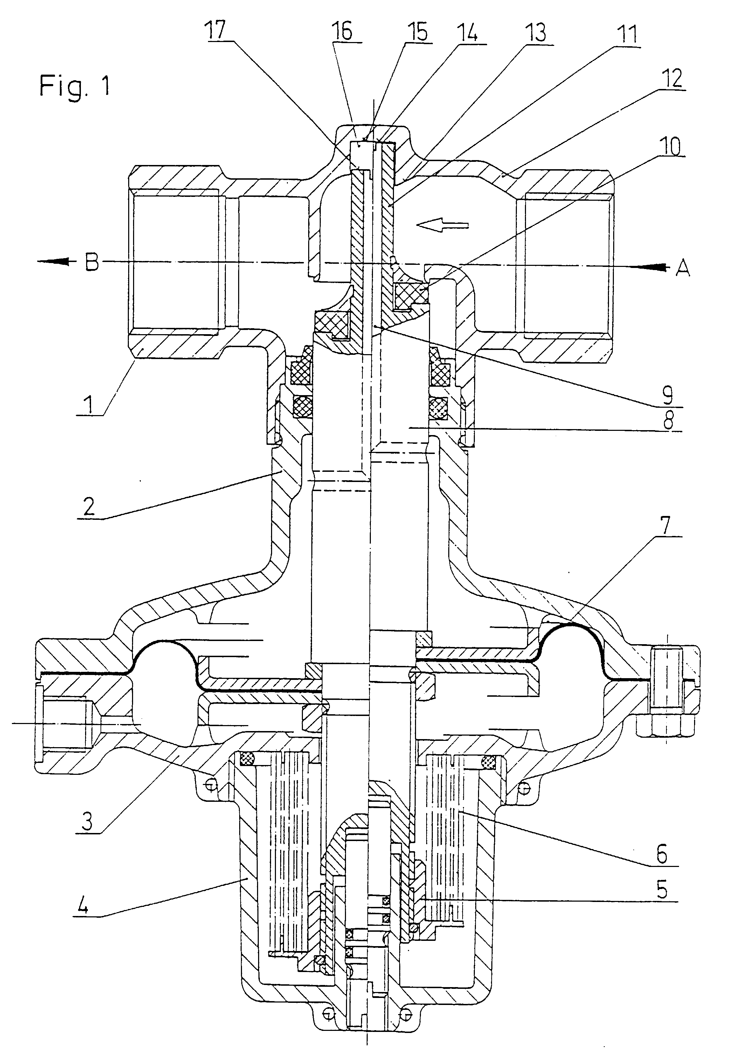

Das Differenzdruckregelventil gemäß Fig. 1 besteht aus einem Gehäuse (1), einer Oberkammer (2), einer Unterkammer (3) und einem Deckel bzw. einer Federhaube (4). Im Inneren des erfindungsgemäßen Differenzdruckregelventils sind eine Konsole oder Federbasis (5), ein Federsatz (6), eine Membrane (7) und eine Kolbenstange (8) mit im Inneren angeordneter Rücklaufimpulsleitung (9) vorgesehen.

An der Kolbenstange (8) ist ein Ventilteller (10) und ein Aufsatz (11) angeordnet. Ein Eintritt (14) in die Impulsleitung (9) ist im oberen Rand (17) des Aufsatzes (11) angeordnet. Im Gehäuse (1) ist in der Wand (12) eine Tasche (16) vorgesehen. Die Tasche (16) erstreckt sich vom eingangsseitigen Rand (13) bis zum ausgangsseitigen Rand (15) der Wand (12). Das durch das Differenzdruckregelventil zu steuernde Medium tritt aus der Richtung (A), die die Eingangsseite kennzeichnet, in das Gehäuse (1) ein, fließt über den Ventilteller (10) und verläßt in Richtung (B) zur Ausgangsseite hin das Gehäuse (1). Der rücklaufseitige Druck des zu steuernden Mediums wirkt über die Impulsleitung (9) auf die in der Fig. 1 obere Seite der Membrane (7). Auf die andere untere Seite der Membrane (7) wirkt der Druck des vorlaufseitizen Eingangs vor dem Gehäuse (1) des erfindungsgemäßen Differenzdruckregelventils. Der Federsatz (6) wirkt auf die Kolbenstange (8) in gleicher Richtung wie der Druck auf der oberen Seite der Membrane (7).

In der Fig. 1 ist das erfindungsgemäße Differenzdruckregelventil rechts in der geschlossenen Stellung und links in der vollgeöffneten Stellung dargestellt. Man erkennt, daß der obere Rand (17) des Aufsatzes (11) sowohl in der geschlossenen als auch in der vollgeöffneten Stellung des Differenzdruckregelventils immer in der Tasche (16) sich befindet. D. h. der obere Rand (17) ist immer höher als der Rand (13) in der Wand (12). D. h. der Eintritt (14) der Impulsleitung (9) liegt immer geschützt in der Tasche (16) und von der Strömung des Mediums im Gehäuse (1) entfernt. Das Medium z. B. das Wasser einer Warmwasserheizungsanlage fließt parallel zur Wand (12) vorbei am Rand (13). Durch diese erfindungsgemäßen Maßnahmen ist eine Möglichkeit der Verschmutzung der Impulsleitung (9) durch im Medium befindliche Partikel gegenüber dem Vorbekannten wesentlich geringer. Der Eintritt (14) der Impulsleitung (9) ist weit entfernt vom Ventilteller (10) und die dort auftretenden Turbulenzen und Druckschwankungen beeinflußen den von der Impulsleitung (9) übermittelten Druck nicht, so daß die Regelung des Differenzdruckes bei dem erfindungsgemäßen Differenzdruckregelventil gegenüber dem Vorbekannten stabiler ist.

Der Federsatz (6) besteht bei dem erfindungsgemäßen Differenzdruckregelventil gemäß Fig. 1 aus einer zwei - oder mehrkonzentrisch liegenden Torsions - oder Schraubenfeder. Wesentlich ist in diesem Zusammenhang, daß alle Federn die gleiche Länge und die gleiche Federkonstante aufweisen. Allein der Durchmesser der Torsions - und Schraubenfedern ist unterschiedlich. Durch diese Maßnahme wird sichergestellt, daß alle verwendeten Federn bei gleicher Vorspannung die gleiche Kraft ausüben. Der Austausch der Federn des Federsatzes (6) ist möglich, wenn man den Deckel oder die Federhaube (4) und die Federbasis oder Konsole (5) entfernt.

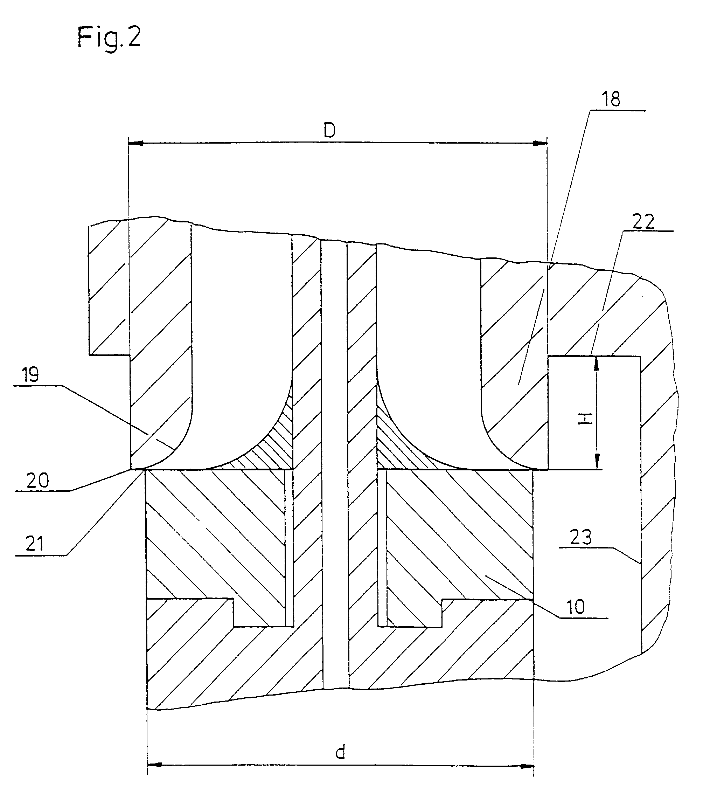

In Fig. 2 sind gleiche oder gleichwirkende Vorrichtungsteile wie in Fig. 1 mit den gleichen Bezugszeichen versehen. In der Fig. 2 ist ein Detail des erfindungsgemäßen Differenzdruckregelventils gemäß Fig. 1 dargestellt, nämlich die Ausbildung des Ventilsitzes (18) und des Ventiltellers (10). In einer Trennwand (22) des Gehäuses (1) ist der Ventilsitz (18) ausgebildet. Ein innerer Rand (19) des Ventilsitzes (18) ist rund ausgebildet. Der äußere Rand (20) des Ventilsitzes (18) ist jedoch scharfkantig. Die Höhe (H), also das Maß zwischen der Trennwand (22) und dem äußeren Rand (20), ist möglichst groß. Der Aubendurchmesser des Ventilsitzes (18) ist mit dem Bezugszeichen (D) bezeichnet und ist erfindungsgemäß größer oder gleich dem Außendurchmesser des Ventiltellers (10), der mit (d) bezeichnet ist. Hierbei hat der äußere Rand (21) des Ventiltellers (10) den Durchmesser (d). Eine Seitenwand (23) des Gehäuses (1) ist so weit wie möglich entfernt vom Ventilteller (10). Durch die beschriebenen Maßnahmen wird sichergestellt, daß das vom erfindungsgemäßen Differenzdruckregelventil gesteuerte Medium beim Öffnen des Ventils, d. h. beim Abheben des Ventiltellers (10) vom Ventilsitz (18), möglichst frei und unbehindert und ohne Erzeugung von Turbulenzen durch die Engstelle zwischen dem Ventilteller (10) und dem Ventilsitz (18) strömen kann, so daß möglichst wenig Turbulenzen oder Kavitation auftreten. In diesem Zusammenhang ist besonders wichtig, daß der Durchmesser (D) des Ventilsitzes (18) größer oder gleich dem Durchmesser (d) des Ventiltellers (10) ist.

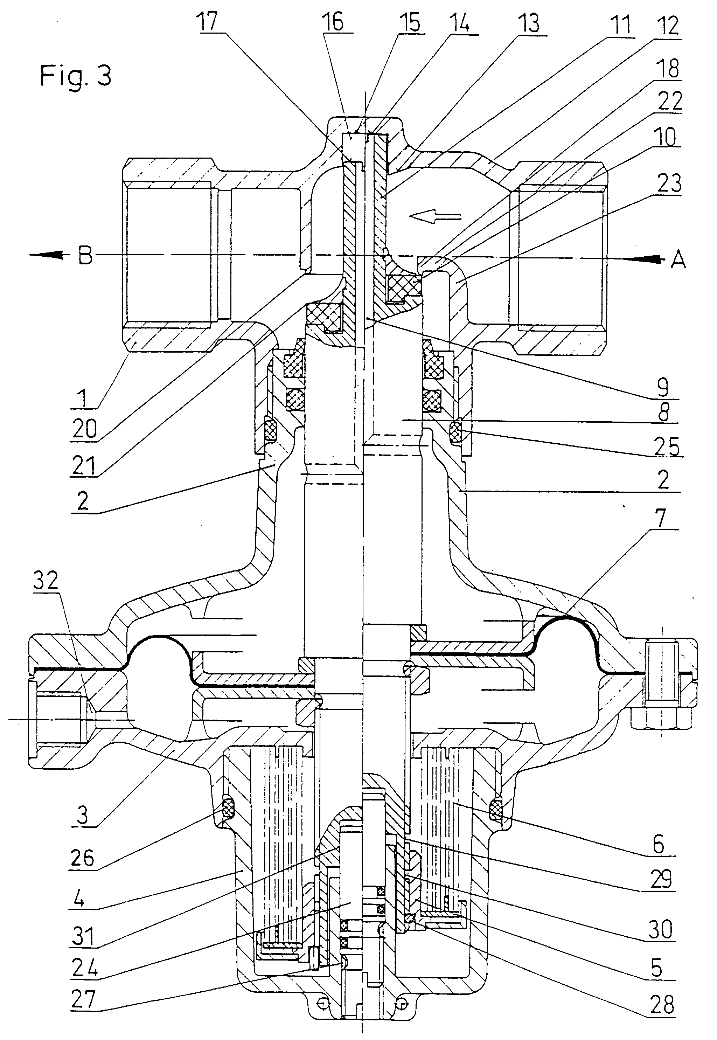

In Fig. 3 sind gleiche oder gleichwirkende Vorrichtungsteile, wie in den Fig. 1 und 2, mit den gleichen Bezugszeichen versehen. Der bisher beschriebene Aufbau des erfindungsgemäßen Differenzdruckregelventils entspricht auch dem Aufbau des Differenzdruckregelventils gemäß Fig. 3. In Fig. 3 erkennt man zusätzlich eine Absperrspindel (24), die durch einen Ansatz (27) in der Federhaube (4) drehbar befestigt ist. Durch Drehung der Absperrspindel (24) ist eine Betätigung des erfindungsgemäßen Differenzdruckregelventils in Schließrichtung möglich, so daß z. B. für Wartungsarbeiten an einer Warmwasserheizungsanlage das erfindungsgemäße Differenzdruckregelventil unabhängig von den gemessenen Drücken geschlossen werden kann. Über eine Führungsbohrung (31) in der Kolbenstange (8) wird mittels der Absperrspindel (24) auch die Kolbenstange (8) in Richtung der Mittelachse geöffnet. Durch diese Maßnahme ist keine weitere Führung der Kolbenstange (8) in der Unterkammer (3) des erfindungsgemäßen Differenzdruckregelventils erforderlich. Zur möglichst sicheren Abdichtung der Oberkammer (2) gegenüber dem Gehäuse (1) und der Unterkammer (3) gegenüber dem Deckel bzw. der Federhaube (4) sind in Fig. 3 eine erste Weichstoffdichtung, die als O-Ringdichtung (25) ausgebildet ist und eine zweite Weichstoffdichtung, die als O-Ringabdichtung (26) ausgebildet ist, vorgesehen.

Um ein ungewolltes Abdrehen der Federbasis (5) von dem Gewinde der Kolbenstange (8) zu verhindern, ist in der Fig. 3 ein Sprengring (28) vorgesehen, der andererseits zum Auswechseln bzw. zum Entnehmen und Zufügen von Federn des Federsatzes (6) entnommen werden kann. Befindet sich der Sprengring (28) in der in Fig. 3 dargestellten Position, so dient er als unterer Anschlag für die Federbasis (5). Weiterhin sind in Fig. 3 eine obere Markierung (29) und eine untere Markierung (30) vorgesehen, die bei einer Verdrehung bzw. Verstellung der Federbasis (5) als Ablesemarkierung dienen, um bei einer Feineinstellung des voreingestellten Differenzsolldruckes die direkte Ablesung der voreingestellten Differenzdrucksollwerte zu ermöglichen.

Schließlich ist in Fig. 3 mit dem Bezugszeichen (32) der vorlaufseitige Impulsleitungsanschluß bezeichnet. Wesentlich ist, daß durch die Abdichtung der Federhaube (4) gegenüber der Unterkammer (3) mittels der O-Ringdichtung (26) es möglich ist, daß das vorlaufseitige Medium über den vorlaufseitigen Impulsleitungsanschluß (32) in die Federhaube (4) hineinströmen kann, ohne daß weitere Abdichtungsmaßnahmen zwischen der Unterkammer (3) und dem Kolben (8) erforderlich sind.

Das erfindungsgemäße Differenzdruckregelventil funktioniert nun folgendermaßen. Es sei angenommen, daß sich die Absperrspindel (24) in der in Fig. 3 dargestellten Stellung befindet und daß das Differenzdruckregelventil mit Eingang, Ausgang und dem vorlaufseitigen Impulsleitungsanschluß verbunden ist. In diesem Falle wird der Differenzdruck zwischen dem Vorlauf und dem Rücklauf dadurch geregelt, daß auf die Membrane (7) über die rücklaufseitige Impulsleitung (9) die Membrane (7) in Fig. 3 oben belastet ist und über die vorlaufseitige Impulsleitung (32) die Membrane (7) in Fig. 3 unten belastet ist. Zusätzlich wirkt die Belastung durch den Federsatz (6) auf die Membrane (7) über die Kolbenstange (8) in der gleichen Richtung wie der Druck über die rücklaufseitige Impulsleitung (9). Durch die wirkenden Drücke und durch die wirkenden Federkräfte stellt sich eine bestimmte Lage des Ventiltellers (10) gegenüber dem Ventilsitz (18) ein, die sich abhängig von den Drücken in Vorlauf und Rücklauf ändert. Soll nun das erfindungsgemäße Differenzdruckregelventil zu Wartungszwecken geschlossen werden, so wird die Absperrspindel (24) in Fig. 3 nach oben in die Federhaube (4) hineingedreht, so daß die Kolbenstange (8) in Fig. 3 nach oben geschoben wird, bis der Ventilteller (10) auf dem Ventilsitz (18) aufliegt.

Wie insbesondere der Fig. 3 zu entnehmen ist, weist das erfindungsgemäße Differenzdruckregelventil einen vergleichsweise einiachen mechanischen Aufbau auf, der aufgrund der gewählten Konstruktion vergleichsweise wenig Dichtmittel erfordert, um das Differenzdruckregelventil gegenüber der Umgebung abzudichten. Weiterhin ist durch die besondere Konstruktion der rücklaufseitigen Impulsleitung (9) eine außerhalb des Ventils angeordnete rücklaufseitige Impulsleitung nicht erforderlich, so daß auch der dafür gegebenenfalls erforderliche Installationsaufwand entfällt. Durch die besondere Ausbildung von Ventilsitz (18) und Ventilteller (10) wird eine möglichst freie und geräuscharme Strömung des Mediums durch das erfindungsgemäße Differenzdruckregelventil ermöglidht. Durch den erfindungsgemäß vorgesehenen Federsatz (6) mit der Verstellbarkeit über die Federbasis (5) ist eine eintache, störungssichere Voreinstellung des gewünschten Differenzdrucksollwertes möglich.

## Patentansprüche

1. Differenzdruckregelventil für Warmwasser-Heizungsanlagen mit einem Gehäuse (1), das einen Ventilsitz (18) aufweist, mit einer im Gehäuse verschieblich angeordneten Kolbenstange (8) die einen Ventilteller (10) trägt, der mit dem Ventilsitz zusammenwirkt, mit einer federbelasteteten und mit der Kolbenstange verbundenen Membrane (7) die ventilsitzseitig über eine Rücklauf-Impulsleitung (9) mit dem Rücklaufdruck im Heizkreislauf beaufschlagt wird und die auf der vom Ventilsitz abgewandten Seite über eine Vorlauf-Impulsleitung (32) mit dem Vorlaufdruck im Heizkreislauf beaufschlagt wird, wobei die Kolbenstange (8) einen Aufsatz (11) aufweist und wobei die RücklaufImpulsleitung (9) innerhalb des Aufsatzes (11) und der Kolbenstange (8) angeordnet ist dadurch gekennzeichnet, daß das Gehäuse (1) eine einstückig mit dem Gehäuse (1) ausgebildete Tasche (16) aufweist, die sich von der Innenoberfläche des Eingangskanals ausgehend im wesentlichen nach außen erstreckt und in die der Aufsatz (11) eintaucht derart, daß der Eintritt (14) der RücklaufImpulsleitung (9) sich innerhalb eines Bereiches befindet, wo das Medium im wesentlichen ruht, wobei der spalt zwischen Tasche (16) und Aufsatz (11) enger als die Dicke der Gehäusewand ist.

2. Differenzdruckregelventil nach Anspruch 1, dadurch gekennzeichnet, daß der Eintritt (14) in die Rücklaufimpulsleitung (9) an dem dem Boden (15) der Tasche (16) zugewandten oberen Rand (17) des Aufsatzes (11) angeordnet ist und daß eine eingangsseitige Kante (13) einer Gehäusewand (12) etwas schräg zur Achse des Aufsatzes (11) steht und in Richtung zum Ventilteller (10) geneigt ist.

3. Differenzdruckregekventil nach Anspruch 1, dadurch gekennzeichnet, daß die Tiefe der Tasche (16) und die Länge des Aufsatzes (11) derart bemessen sind, daß auch bei vollgeöffnetem Differenzdruckregelventil der Eintritt (14) in die Rücklaufimpulsleitung (9) sich in der Tasche (16) befindet.

4. Differenzdruckregelventil nach Anspruch 1, dadurch gekennzeichnet, daß die Rücklaufimpulsleitung (9) in einer einstückig ausgebildeten Oberkammer (2) mündet, die direkt in das Gehäuse (1) eingeschraubt ist, und daß eine Unterkammer (3) vorgesehen ist und die Membrane (7) abgedichtet zwischen Oberkammer (2) und Unterkammer (3) eingespannt ist.

5. Differenzdruckregelventil nach Anspruch 1, dadurch gekennzeichnet, daß die Membrane (7) durch einen Federsatz (6), bestehend aus einer oder mehr Schraubenfedern, in Öffnungsrichtung des Differenzdruckregelventils belastet ist und daß die Schraubenfedern alle die gleiche Länge und die gleiche Federkonstante aufweisen.

6. Differenzdruckregelventil nach Anspruch 4 und Anspruch 5, dadurch gekennzeichnet, daß der Federsatz (6) sich einerseits an der Unterkammer (3) unmittelbar abstützt und andererseits durch eine an der Kolbenstange (8) angeordnete verstellbare Federbasis (5) in seiner Vorspannung veränderlich ist.

7. Differenzdruckregelventil nach Anspruch 6, dadurch gekennzeichnet. daß eine abnehmbare Federhaube (4) vorgesehen ist, die den Federsatz (6) umschließt und die an der Unterkammer (3) angeordnet ist, und daß eine Absperrspindel (24) vorgesehen ist, die durch einen Ansatz (27) in der Federhaube (4) drenbar gelagert ist und die in einer Führungsbohrung (31) der Kolbenstange (8) dreh - und verschiebbar gelagert ist.

8. Differenzdruckregelventil nach Anspruch 6, dadurch gekennzeichnet, daß die Federbasis (5) durch einen Sprengring (28) gegen Abdrehen oder Abfallen gesichert ist und daß die Kolbenstange (8) Markierungen, insbesondere Markierungsnuten (29,30), für die Einstellung der Federbasis (5) aufweist.

9. Differenzdruckregelventil nach Anspruch 4 und/oder Anspruch 7, dadurch gekennzeichnet, daß zwischen der Oberkammer (2) und dem Gehäuse (1) und/oder zwischen der Unterkammer (3) und der Federhaube (4) eine Weichstoffdichtung, insbesondere eine O-Ringdichtung (25,26) vorgesehen ist.

10. Differenzdruckregelventil nach Anspruch 1, dadurch gekennzeichnet, daß der Durchmesser (d) des Ventiltellers (10) gleich oder derart kleiner als der Durchmesser (D) des Ventilsitzes (18) ist, daß auch bei größter fertigungsbedingter Abweichung der äußere Rand (21) des Ventiltellers (10) nicht über den äußeren Rand (20) des Ventilsitzes (18) hinausragt, daß der äußere Rand (20) des Ventilsitzes (18) scharfkantig ist, daß der äußere Rand (20) des Ventilsitzes (18) von der Trennwand (22) und der Seitenwand (23) des Gehäuses (1) möglichst weit entfernt ist, daß der innere Rand (19) des Ventilsitzes (18) abgerundet ist und daß der äußere Rand (21) des Ventiltellers (10) scharfkantig ist.

## Claims

1. Differential pressure control valve for hot water heating installations, with a housing (1) which has a valve seat (18), with a piston rod (8) which is displaceably disposed in the housing and carries a valve head (10) which cooperates with the valve seat, with a spring-loaded diaphragm (7) connected to the piston rod, which diaphragm is acted upon on the valve seat side by the return pressure in the heating circuit via a return pulse line (9) and is acted upon on the side facing away from the valve seat by the forward pressure in the heating circuit via a forward pulse line (32), the piston rod (8) having a top extension (11) and the return pulse line (9) being disposed inside the top extension (11) and the piston rod (8), characterised in that the housing (1) has a pocket (16) which is constructed in one piece with the said housing (1) and extends substantially outwards, starting from the inner surface of the entry duct, and into which the top extension (11) is inserted in such a way that the inlet (14) of the return pulse line (9) is located within a region where the medium is substantially at rest, the gap between the pocket (16) and the top extension (11) being narrower than the thickness of the housing wall.

2. Differential pressure control valve according to claim 1, characterised in that the inlet (14) to the return pulse line (9) is disposed on that upper rim (17) of the top extension (11) that faces towards the bottom (15) of the pocket (16) and that an entry-side edge (13) of a housing wall (12) is situated somewhat obliquely to the axis of the top extension (11) and is inclined in a direction towards the valve head (10).

3. Differential pressure control valve according to claim 1, characterised in that the depth of the pocket (16) and the length of the top extension (11) are dimensioned in such a way that the inlet (14) to the return pulse line (9) is located in the pocket (16), even when the differential pressure control valve is fully open.

4. Differential pressure control valve according to claim 1, characterised in that the return pulse line (9) opens into an upper chamber (2) of one-piece construction which is screwed directly into the housing (1), and that a lower chamber (3) is provided and the diaphragm (7) is clamped in a sealed manner between the upper chamber (2) and the lower chamber (3).

5. Differential pressure control valve according to claim 1, characterised in that the diaphragm (7) is loaded in the direction of opening of the differential pressure control valve by means of a set of springs (6) consisting of one or more coil springs, and that the coil springs all have the same length and the same spring constant.

6. Differential pressure control valve according to claim 4 and claim 5, characterised in that the set of springs (6) is directly supported at one end on the lower chamber (3) and, at the other end, can be varied in its initial stress by an adjustable spring base (5) disposed on the piston rod (8).

7. Differential pressure control valve according to claim 6, characterised in that a removable spring cap (4) is provided, which surrounds the set of springs (6) and is disposed on the lower chamber (3), and that a shutting-off spindle (24) is provided which is rotatably mounted in the spring cap (4) by means of a neck (27) and is rotatably and displaceably mounted in a guide bore (31) in the piston rod (8).

8. Differential pressure control valve according to claim 6, characterised in that the spring base (5) is secured against twisting off or falling off by means of a spring ring (28), and that the piston rod (8) has markers, particularly marker grooves (29, 30), for adjusting the spring base (5).

9. Differential pressure control valve according to claim 4 and/or claim 7, characterised in that a seal of soft material, particularly an O-ring seal (25, 26), is provided between the upper chamber (2) and the housing (1) and/or between the lower chamber (3) and the spring cap (4).

10. Differential pressure control valve according to claim 1, characterised in that the diameter (d) of the valve head (10) is the same as the diameter (D) of the valve seat (18) or is smaller than the said diameter (D) in such a way that, even in the event of the largest production-induced deviation, the outer rim (21) of the valve head (10) does not project beyond the outer rim (20) of the valve seat (18), that the outer rim (20) of the valve seat (18) is sharp-edged, that the outer rim (20) of the valve seat (18) is as far removed as possible from the dividing wall (22) and the side wall (23) of the housing (1), that the inner rim (19) of the valve seat (18) is rounded, and that the outer rim (21) of the valve head (10) is sharpedged.

## Revendications

1. Soupape de régulation de pression différentielle pour installations de chauffage à l'eau chaude, comportant : une enceinte (1) qui présente un siège de soupape (18) ; une tige de piston (8) qui est montée mobile en translation dans l'enceinte (1) et qui porte une tête de soupape (10), laquelle coopère avec le siège de soupape ; une membrane (7) chargée par ressort(s) et liée à la tige de piston (8), cette membrane étant exposée, côté siège de soupape, par l'intermédiaire d'une conduite d'impulsion de retour (9), à la pression de retour dans le circuit de chauffage et étant exposée, du côté non tourné vers le siège de soupape (18), à la pression d'arrivée dans le circuit de chauffage, par l'intermédiaire d'une conduite (32) d'impulsion d'arrivée, la tige de piston (8) comportant un prolongement rapporté (11) et la conduite d'impulsion de retour (9) étant agencée à l'intérieur du prolongement rapporté (11) et de la tige de piston (8), caractérisée par le fait que l'enceinte (1) présente une poche (16) d'un seul tenant avec l'enceinte (1), laquelle s'étend en partant de la surface intérieure du canal d'entrée sensiblement vers l'extérieur et dans laquelle plonge le prolongement rapporté (il) de manière telle que l'entrée (14) de la conduite d'impulsion de retour (9) se trouve à l'intérieur d'une région où le fluide est sensiblement au repos, la fente entre la poche (16) et le prolongement rapporté (11) étant plus étroite que l'épaisseur de la paroi de l'enceinte.

2. Soupape de régulation de pression différentielle selon la revendication 1, caractérisée par le fait que l'entrée (14) dans la conduite d'impulsion de retour (9) est disposée sur le bord supérieur (17) que le prolongement rapporté (11) comporte en direction du fond (15) de la poche (16), et par le fait qu'une arête (13) située côté arrivée, appartenant à une paroi (12) de l'enceinte, est légèrement oblique par rapport à l'axe du prolongement rapporté (11) et est inclinée en direction de la tête de soupape (10).

3. Soupape de régulation de pression différentielle selon la revendication 1, caractérisée par le fait que la profondeur de la poche (16) et la longueur du prolongement rapporté (11) ont des dimensions telles que, même lorsque la soupape de régulation de pression différentielle est complètement ouverte, l'entrée (14) de la conduite d'impulsion de retour (9) se trouve dans la poche (16).

4. Soupape de régulation de pression différentielle selon la revendication 1, caractérisée par le fait que la conduite d'impulsion de retour (9) débouche dans une chambre supérieure (2) réalisée d'un seul tenant, qui est vissée directement dans l'enceinte (1), et par le fait qu'une chambre inférieure (3) est prévue, et la membrane (7) est enserrée, en condition d'étanchéité, entre la chambre supérieure (2) et la chambre inférieure (3).

5. Soupape de régulation de pression différentielle selon la revendication 1, caractérisée par le fait que la membrane (7) est chargée, dans le sens correspondant à l'ouverture de la soupape de régulation de pression différentielle, par un jeu de ressort(s) (6) constitué par un ou plusieurs ressorts hélicoïdaux, et par le fait que les ressorts hélicoïdaux présentent tous la même longueur et la même constante élastique.

6. Soupape de régulation de pression différentielle selon la revendication 4 et la revendication 5, caractérisée par le fait que, d'une part, le jeu de ressort(s) (6) prend appui directement contre la chambre inférieure (3), et que, d'autre part, la précontrainte du jeu de ressort(s) (6) est réglable au moyen d'une base de ressort(s) (5) à position réglable agencée sur la tige de piston (8).

7. Soupape de régulation de pression différentielle selon la revendication 6, caractérisée par le fait qu'il est prévu une coiffe (4) à ressort(s) amovible, laquelle entoure le jeu de ressort(s) et est agencée contre la chambre inférieure (3), et par le fait qu'il est prévu une broche d'arrêt (24) qui, grâce à un embout (27) est montée à rotation dans la coiffe (4) à ressort(s) et qui est montée avec possibilité de rotation et de translation dans un trou de guidage (31) que comporte la tige de piston (8).

8. Soupape de régulation de pression différentielle selon la revendication 6, caractérisée par le fait que la base (5) pour l'appui de ressort(s) est arrêtée en rotation et empêchée de tomber par un anneau élastique (28), et par le fait que la tige de piston (8) présente des marques, notamment des rainures de repérage (29, 30), pour le réglage de position de la base (5) pour l'appui de ressort(s).

9. Soupape de régulation de pression différentielle selon la revendication 4 et/ou la revendication 7, caractérisée par le fait qu'entre la chambre supérieure (2) et l'enceinte (1), et/ou entre la chambre inférieure (3) et la coiffe du ou des ressorts (4), il est prévu un joint d'étanchéité en matière souple, notamment un joint d'étanchéité torique (29, 26).

10. Soupape de régulation de pression différentielle selon la revendication 1, caractérisée par le fait que le diamètre (d) de la tête de soupape (10) est égal au diamètre (D) du siège de soupape (18) ou est plus petit que celui-ci, de manière telle que, même dans le cas du plus grand écart de fabrication, le bord extérieur (21) de la tête de soupape (10) ne déborde pas au-delà du bord extérieur (20) du siège de soupape (18), par le fait que le bord extérieur (20) du siège de soupape (18) est à arête vive, par le fait que le bord extérieur (20) du siège de soupape (18) est aussi éloigné que possible de la cloison séparatrice (22) et de la paroi latérale (23) de l'enceinte (1), par le fait que le bord intérieur (19) du siège de soupape (18) est arrondi et par le fait que le bord extérieur (21) de la tête de soupape (10) est à arête vive.
